# FASCICULE DE BREVET EUROPEEN

(11) **EP 0 438 009 B1**
(45) Date de publication et mention de la délivrance du brevet: **22.03.1995**
(21) Numéro de dépôt: 90460052.5
(22) Date de dépôt: 19.12.1990
(51) Int. Cl.: H04L 12/56

(54) **Méthode et système de lissage et de contrôle de débits de communications temporelles asynchrones**
Verfahren und System zur Glättung und Überwachung der Datenraten von asynchronen Zeitmultiplexübertragungen
Method and system for smoothing and monitoring the data rates of asynchronous time division communications

(30) Priorité: 19.01.1990 FR 9000770
(43) Date de publication de la demande: 24.07.1991
(60) Demande divisionnaire: 91120628.2
(73) Titulaire: Boyer, Pierre, F-22300 Lannion (FR); Rouaud, Yvon, F-22300 Lannion (FR); Servel, Michel, F-22300 Lannion (FR)
(72) Inventeur: Boyer, Pierre, F-22300 Lannion (FR); Rouaud, Yvon, F-22300 Lannion (FR); Servel, Michel, F-22300 Lannion (FR)
(74) Mandataire: Le Guen, Louis François

(56) Documents cités:
- EP-A- 0 329 159
- GB-A- 1 427 319
- REVUE HF TIJDSCHRIFT, vol. XIV, no. 5/6, novembre 1989, pages 155-164,Bruxelles, BE; J. BAUWENS et al.: "Architecture of the local exchange in the Belgian broadband experiment"
- IEEE JOURNAL ON SELECTED AREAS IN COMMUNICATIONS, vol. SAC-5, no. 8, octobre1987, pages 1315-1326, IEEE, New York, US; M.G.H. KATEVENIS: "Fast switching and fair control of congested flow in broadband network"

## Description

La présente invention concerne une méthode et un système de lissage et de contrôle de débits de communications temporelles asynchrones par circuits virtuels.

On connaît déjà des systèmes de contrôle des flux de paquets ou de cellules portés par des multiplex temporels asynchrones. L'acheminement de débits quelconques et le partage des mêmes ressources de transmission constituent l'intérêt de la technique temporelle asynchrone. On rappelle qu'un multiplex temporel asynchrone a la structure de celui qui est décrit dans le document EP-A-108 028. Dans un tel multiplex, les données sont transmises par paquets de même longueur chacun précédé d'une étiquette de longueur fixe identifiant le circuit virtuel auquel le paquet appartient. Dans la suite, pour se conformer à la désignation maintenant usuelle, on désignera par "cellule" l'étiquette suivie du paquet. Le multiplexage temporel asynchrone permet notamment de transmettre sur un même support, c'est-à-dire le multiplex temporel asynchrone, des cellules appartenant à des circuits virtuels différents. Le nombre maximal de circuits virtuels sur un multiplex est déterminé par la longueur en bits de la partie de l'étiquette qui identifie chaque circuit virtuel.

L'allocation des multiplex temporels s'appuie généralement sur des statistiques des taux d'activité des différentes sources pouvant y avoir accès si bien qu'il a un risque non nul de pertes d' informations par débordement des files d'attente dû à des surcharges instantanées. Il faut évidemment minimiser ces pertes, mais la solution n'est pas facile car les flux délivrés par les différentes sources sont de caractère discontinu et sont sporadiques. De plus, des terminaux malveillants sont susceptibles d'injecter dans le réseau des cellules à un débit supérieur à celui qui leur a été attribué lors de l'établissement de leur communication.

Les documents EP-A-293 314 et EP-A-293 315 décrivent déjà chacun des méthodes et des sytèmes de contrôle de flux de paquets, particulièrement ceux qui sont portés par des multiplex temporels asynchrones. Les documents US-A-4 475 192 et US-A-4 6111 322 traitent également les contrôles de trafics. A ce sujet, on peut aussi se reporter à l'article intitulé "The Challenge of Multipoint Communication" par Jonathan S. Turner, 5^{th} ITC Seminar, Lake Como, mai 1987, chapitre 5 - Congestion Control. Ce document définit notamment le dispositif connu sous la dénomination anglaise "leaky bucket". D'une manière générale dans ces contrôles de flux, on élimine les cellules en trop lorsque le nombre de cellules reçues dépasse la quantité prévue lors de l'établissement de la communication, ce nombre étant évalué sur un temps correspondant à la dispersion de temps de propagation maximale admissible. Cette dispersion de temps de propagation est couramment évaluée pour un taux de perte associé très faible, de l'ordre de 10⁻¹⁰.

Ces méthodes, systèmes et dispositifs connus satisfont bien aux conditions d'écrêtage de débit, mais s'il se présente une rafale de cellules consécutives ou presque consécutives appartenant à un même circuit virtuel, même si le nombre de cellules n'excède pas dans la rafale le nombre autorisé pendant l'intervalle de mesure considéré, la rafale risque de créer une surcharge instantanée dans la partie aval du réseau de commutation temporel. En effet, la durée des rafales assimilables par le réseau est nettement inférieure à l'amplitude de la dispersion de temps de propagation attendue. Il faut noter que ces rafales ou "grumeaux" de cellules peuvent être produites, non seulement, par les sources, mais encore par le multiplexage amont de flux temporels asynchrones.

Un objet de la présente invention consiste à prévoir une méthode et un système qui, non seulement réalise un contrôle du trafic en éliminant les cellules en trop, mais encore en lissant les rafales mentionnées ci-dessus.

Suivant une caractéristique de l'invention, il est prévu une méthode de lissage de débits de communications temporelles asynchrones formées de cellules portées par un multiplex temporel asynchrone entrant pour délivrer un multiplex temporel asynchrone sortant, chaque cellule entrante étant rangée dans une mémoire tampon à une adresse correspondant à son heure réelle de réémission sur le multiplex temporel sortant, ladite heure réelle de réémision étant déterminée en fonction d'une période attribuée à la communication à laquelle appartient ladite cellule entrante, ladite période correspondant à la période minimale théorique entre cellules réémises dans le multiplex temporel asynchrone sortant.

Suivant une autre caractéristique ladite période est attribuée à la communication selon le débit de la source émettant les cellules de la communication et peut être choisie entre zéro et la valeur du débit du multiplex entrant.

Suivant une autre caractéristique, ladite adresse de rangement de la cellule entrant dans ladite mémoire tampon est déterminée en calculant en fonction de ladite période une heure théorique d'émission, puis en cherchant dans la mémoire tampon la première adresse libre correspondant à une heure réelle d'émission qui soit chronologiquement au-delà de ladite heure théorique d'émission.

Suivant une autre caractéristique, ladite heure théorique d'émission d'une cellule entrante est:
- soit l'heure calculée en ajoutant ladite période attribuée à ladite communication à laquelle appartient la cellule entrante à l'heure théorique d'émission déterminée pour la cellule précédente de la même communication, si l'heure d'arrivée de ladite cellule entrante n'est pas au-delà de l'heure théorique d'émission ainsi calculée,
- soit, dans le cas contraire, l'heure d'arrivée de ladite cellule entrante.

Suivant une autre caractéristique, un système ou ensemble de moyens est prévu pour mettre en oeuvre les méthodes mentionnées ci-dessus, le système comprenant, une mémoire tampon, une mémoire d'état, une base de temps et une unité arithmétique et logique,
la mémoire tampon étant divisée en case de mémoire, chaque case de la mémoire tampon comprenant trois sections:
- une première section dans laquelle est mémorisé le champ des données utiles d'une cellule,
- une seconde section dans laquelle est mémorisée l'étiquette de ladite cellule,
- une troisième section dans laquelle est mémorisé un bit indiquant l'occupation ou la disponibilité de la case,

la mémoire d'état étant divisée en zones, chaque zone correspondant biunivoquement à une communication transmise par le multiplex temporel asynchrone entrant et comprenant trois sections:
- une première section dans laquelle est mémorisée l'heure théorique d'émission de la cellule précédente appartenant à la même communication que la cellule entrante,
- une seconde section dans laquelle est mémorisée la période attribuée à la communication,
- une troisième section dans laquelle est mémorisée le nombre de cellules de la communication qui sont mémorisées dans la mémoire tampon et qui n'ont pas été encore émises à l'heure d'arrivée de la cellule entrante de la même communication,

la base de temps délivrant l'heure réelle dont chaque temps élémentaire correspond à une adresse de case de la mémoire tampon, et
l'unité arithmétique et logique effectuant le calcul conduisant à l'heure théorique d'émission, la comparaison de celle-ci avec l'heure d'arrivée et déterminant l'adresse de la cellule entrante courante en fonction du résultat de la comparaison.

Suivant une autre caractéristique, la méthode de lissage mentionnée ci-dessus est complétée par un traitement de contrôle de flux consistant à comparer le nombre de cellules d'une même communication qui sont mémorisées dans la mémoire tampon et qui n'ont pas été encore émises à l'heure d'arrivée d'une cellule entrante appartenant à ladite communication à un nombre maximal attribué à la communication et, dans le cas où le premier nombre dépasse le second, à ne pas réémettre ladite cellule entrante.

Suivant une autre caractéristique, quand les valeurs binaires à comparer sont situées de part et d'autre de la valeur zéro du cycle de la base de temps, un "1" est ajouté à leur bit de poids fort de manière à réaliser les comparaisons sur des valeurs translatées à l'intérieur d'une zone temporelle ne comportant pas de valeur nulle.

Suivant une autre caractéristique, chaque zone de la mémoire d'état comprend une quatrième section dans laquelle est mémorisé le nombre maximal ci-dessus et l'unité arithmétique et logique effectue la comparaison entre ledit premier nombre et le second ou nombre maximal, et inhibe le traitement de la cellule entrante.

Suivant une autre caractéristique, le système destiné à mettre en oeuvre les méthodes de lissage ci-dessus comprend encore une mémoire d'adresses disponibles comportant autant de cases à un bit que la mémoire tampon comporte de cases, chaque case à un bit recopiant le contenu de la troisième section de la case associée de la mémoire tampon, ladite mémoire d'adresses disponibles comportant des moyens pour explorer ses cases à un bit dans l'ordre d'adressage croissant à partir d'une adresse déterminée et pour arrêter l'exploration quand ils trouvent la première case à un bit indiquant la disponibilité, l'adresse déterminée correspondant à l'heure théorique d'émission de la cellule entrante traitée et la fin de l'exploration déterminant l'heure réelle de sa réémission et l'occupation de la case associée de la mémoire tampon.

Suivant une autre caractéristique, le système comprend un circuit de détection de voisinage de zéro dont la sortie est activée quand les valeurs à comparer sont voisines de zéro, les bits de poids fort des valeurs à comparer étant respectivement appliqués aux premières entrées de portes OU-exclusif correspondantes dont les secondes entrées sont reliées à la sortie du circuit de détection de voisinage de zéro, les sorties desdites portes étant reliées aux entrées correspondantes des comparateurs correspondants.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est un schéma-bloc d'un système suivant l'invention,
la Fig. 2 montre des structures de mots correspondants à des heures ou à des intervalles de temps utilisés dans le système de la Fig. 1,
la Fig. 3 est un bloc-diagramme d'une unité arithmétique et logique utilisée dans le système de la Fig. 1,
la Fig. 4 est un schéma de la partie arithmétique de l'unité de la Fig. 3,
la Fig. 5 montre des organigrammes temporels illustrant un cas de fonctionnement du système de l'invention,
la Fig. 6 montre aussi des organigrammes temporels illustrant un autre cas de fonctionnement, et
les Figs. 7 à 9 montrent les tables des décisions logiques prises dans la partie logique de l'unité de la Fig. 1.

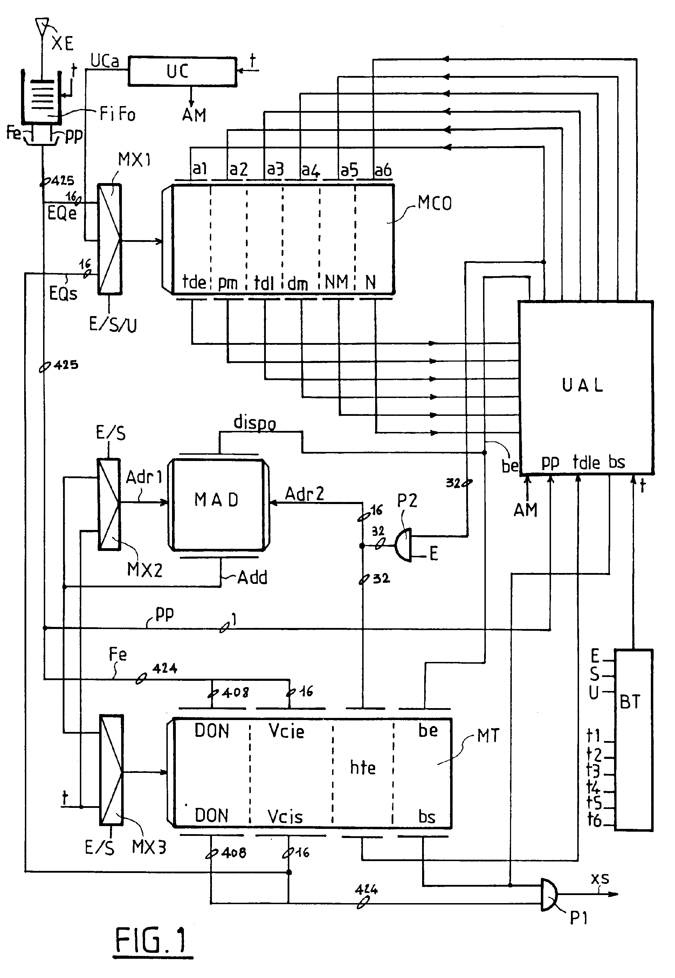

Le système de la Fig. 1 comprend une file d'attente d'entrée FiFo, une mémoire d'état MCO, associée à une unité arithmétique et logique UAL et à un multiplexeur d'adressage MX1, une mémoire d'adresses disponibles MAD associée à un multiplexeur d'adressage MX2, une mémoire tampon MT associée à un multiplexeur d'adressage MX3, des portes ET P1 et P2, une base de temps BT et une unité de commande à microprocesseur UC.

A l'entrée de la mémoire d'attente FiFo est appliqué le multiplex entrant XE. Les portes P1 délivrent le multiplex sortant XS.

Dans l'exemple de réalisation décrit, le multiplex XE est un multiplex temporel asynchrone du type de celui qui est décrit dans le document EP-A-108 028, mais dont les paquets, maintenant appelés "cellules", sont supposés avoir été mis sous forme parallèle à 424 bits. Cette taille de 424 bits correspond à celle d'une cellule qui a été adoptée en juin 1989 par le CCITT. La mémoire FiFo est une file d'alignement, semblable à celle qui est décrite dans le document EP-A-113 307, dont le rôle est d'adapter le débit entrant sur l'horloge locale t du système de la Fig. 1. Chaque cellule sortant de la file FiFo est donc synchrone de l'horloge locale et est présentée sur un faisceau Fe de 424 fils, dont les seize premiers EQe transmettent les seize premiers bits qui constituent l'étiquette Vcie qui identifie le circuit virtuel qui achemine la cellule, c'est-à-dire qui identifie la communication concernée. La file FiFo a encore une sortie PP qui porte un signal du même nom qui indique si l'intervalle de temps entrant est libre ou occupé. Le signal PP est obtenu comme montré à la Fig. 1 du document EP-A-113 307. Il en résulte un faisceau de 425 fils sortant de la mémoire FiFo, le 425^{e} fil portant le signal PP et étant relié à l'entrée du même nom du circuit UAL.

La mémoire d'états MCO est une mémoire vive à accès aléatoire comportant autant de zones que de communications que peut traiter le système. Chaque zone est divisée en six sections respectivement destinées à mémoriser:
- l'heure d'émission théorique de la dernière cellule arrivée tde,
- la période minimale théorique pm,
- l'heure d'émission théorique de la dernière cellule émise tdl,
- le délai maximum dm,
- le nombre NM, et
- le nombre N.

La mémoire MCO a six entrées a1 à a6, correspondant respectivement aux six sections mentionnées ci-dessus. Elle comporte également six sorties portant respectivement les mêmes désignations que les sections. Enfin, son entrée d'adressage est reliée à la sortie du multiplexeur à trois entrées MX1.

La première entrée du multiplexeur MX1 est reliée au faisceau EQe portant l'étiquette Vcie de la cellule entrante, sa seconde entrée est reliée au faisceau EQs portant l'étiquette vcis de la cellule sortante, et sa troisième entrée UCa est reliée à une sortie correspondante de l'unité de commande UC. L'entrée de commande du multiplexeur MX1 est reliée aux sorties E, S et U de la base de temps BT.

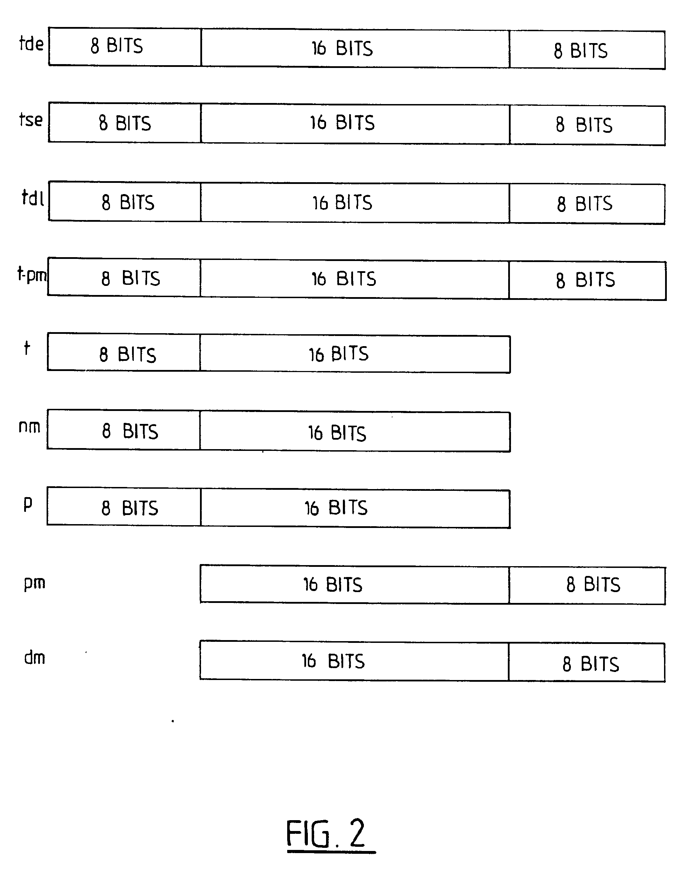

La base de temps BT délivre l'heure locale t dont chaque temps élémentaire correspond à la réception d'une cellule entrante et à l'émission d'une cellule sortante. Comme le montre la Fig. 2, l'heure t, servant à suivre la chronologie des événements, est donnée sur vingt-quatre bits dont une première partie de poids forts composée de huit bits et suivie d'une seconde partie de poids plus faible de seize bits. Comme on le verra plus tard, la première partie permet de repérer les événements à long terme et la seconde sert à l'adressage de la mémoire MT et donc à repérer les événements dans chaque cycle de fonctionnement de la mémoire MT.

L'heure tde définie plus haut est donnée sur trente-deux bits dont une première partie de huit bits et une seconde de seize bits, comme pour t, plus une troisième partie de huit bits de poids faibles constituant une partie décimale dont on verra le rôle plus tard. En fonctionnement normal, l'heure tse se déduit de l'heure théorique d'émission de la cellule précédente de la même communication en y ajoutant la valeur pm qui représente la période minimale théorique de réémission des cellules de la communication concernée. L'heure tde est dite théorique car l'heure réelle d'émission de la cellule concernée pourra en différer, étant donné les conflits possibles entre les temps d'émission théoriques de cellules appartenant à des communications différentes.

La période pm est donnée sur vingt-quatre bits dont la partie de seize bits servant indirectement à l'adressage de la mémoire MT et la partie décimale de huit bits. La période pm correspond au temps minimum qui doit théoriquement séparer les temps de réémission de deux cellules consécutives pour éviter l'effet de "grumeaux" et, par conséquent, lisser le débit des cellules. La partie décimale permet de sélectionner un débit quelconque qui n'est pas nécessairement un sous-multiple du débit du multiplex sortant XS.

L'heure d'émission théorique de la dernière cellule émise tdl est codée sur trente-deux bits, comme tde, correspond à l'heure théorique à laquelle la dernière cellule de la communication concernée aurait dû être émise, même si son heure réelle d'émission a été un peu plus tardive.

Le délai maximum dm est codé sur vingt-quatre bits, comme pm, et correspond au temps de retard maximum admissible que peut prendre une cellule dans le réseau, compte tenu de la dispersion de temps de propagation admise qui a été mentionnée dans le préambule. Pour tenir compte de cette dispersion, on accepte de lisser les débits jusqu'à cette valeur de temps dm. Si, par suite de rafales de cellules consécutives dans la même communication on ne peut garantir ce délai, la cellule concernée est détruite. Le délai dm peut varier en fonction d'éventuelles priorités entre des cellules de communications différentes.

La base de temps BT délivre, en plus de l'heure locale t et pour chaque temps élémentaire, six signaux successifs t1 à t6 qui occupent ensemble un temps élémentaire. Les temps t1 et t2 sont utilisés pour le traitement correspondant à l'arrivée d'une cellule entrante, les temps t3 et t4 pour le traitement correspondant à l'émission d'une cellule sortante, et les temps t5 et t6 pour le traitement de l'accès à la mémoire MCO par l'unité de commande UC. De plus, les sorties t1 et t2 sont réunies pour délivrer le signal E, les sorties t3 et t4 pour donner le signal S et les sorties t5 et t6 pour donner le signal U. Les signaux E, S et U servent notamment à commander les multiplexeurs MX1 à MX3.

La lecture des mémoires s'effectue en t1, t3 et t5 tandis que la réécriture, après calculs, s'effectue en t2, t4 et t6.

La mémoire tampon MT est une mémoire vive à accès aléatoire comportant des cases dont le nombre sera défini dans la suite. Chaque case est divisée en quatre sections respectivement destinées à mémoriser:
- le champ des données DON utiles d'une cellule,
- l'étiquette Vcie de la cellule correspondante,
- l'heure théorique tde d'émission de cette cellule, et
- un bit bs qui, quand il est à "1", indique que la case adressée en lecture contient une cellule utile à transmettre.

La mémoire MT a quatre entrées correspondant respectivement aux données DON, à l'étiquette Vcie, à l'heure théorique d'émission hte et au bit be. Elle comprend également quatre sorties portant respectivement les références DON, vcis, tdse et bes. Les sorties DON et Vcis sont regroupées dans un faisceau de 424 fils reliés respectivement aux premières entrées de 424 portes ET P1 dont les secondes entrées sont reliées à la sortie bes. L'entrée d'adressage de la mémoire MT est reliée à la sortie du multiplexeur MX3.

La première entrée du multiplexeur MX3 est reliée à la sortie de la mémoire MAD et sa seconde entrée reçoit l'heure courante t de la base de temps BT. Son entrée de commande est reliée aux sortie E et S de la base de temps BT.

La mémoire MAD est une mémoire vive à accès aléatoire comportant autant de cases que la mémoire MT, chaque case ayant une capacité de un bit et correspondant biunivoquement à une case de la mémoire MT. Elle a une entrée dispo qui est mise à "1" ou à "0" selon que la mémoire MT est en mode d'écriture ou de lecture. Elle a une sortie Add. Elle comprend deux entrées d'adressage Adr1 et Adr2. L'entrée Adr1 est reliée à la sortie du multiplexeur MX2 dont une entrée est reliée à la sortie Add de la mémoire MAD et dont la seconde entrée reçoit l'heure locale t de la base de temps BT. L'entrée de commande du multiplexeur MX2 a son entrée de commande reliée aux sorties E et S de la base de temps BT. L'entrée d'adressage Adr2 est reliée la sortie de la porte P2.

La sortie Add de la mémoire MAD est reliée à la première entrée du multiplexeur MX3.

Dans la mémoire MAD, une case contient un "0" pour indiquer qu'elle est libre et un "1" pour indiquer qu'elle est occupée. La mémoire MAD fournit en permanence à sa sortie Add l'adresse d'une case libre, cette adresse étant sélectionnée prioritairement à partir de la valeur binaire d'un champ de seize bits extraits de l'heure d'émission théorique hte de la cellule considérée, c'est-à-dire du signal a1, que l'on décrira plus tard, et qui est appliqué à la première entrée des portes P2. Les secondes entrées de ces portes P2 sont reliées à la sortie E de la base de temps BT, ce qui signifie que l'entrée Adr2 de la mémoire MAD n'est active que pendant le traitement d'une cellule entrante et, précisément, pour trouver une adresse Add de case libre dans la mémoire MT. Une mémoire telle la mémoire MAD est décrite dans le document FR-A-2 617 602 intitulé "Circuit pour mémoriser des états de disponibilité de ressources logiques, telles que cellules de mémoire, et établir des adresses de ressources libres". En pratique, la mémoire MAD comprend des moyens pour explorer la case qui est désignée par hte et, quand cette case n'est pas libre, les cases suivantes, et arrêter l'exploration à la première cellule libre, dont l'adresse est alors délivrée par Add.

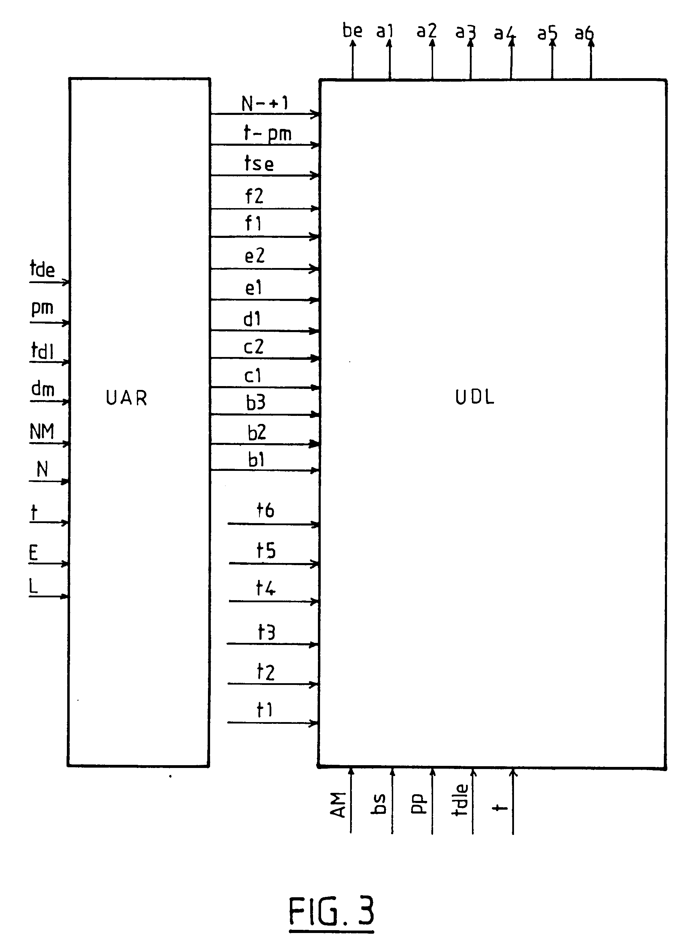

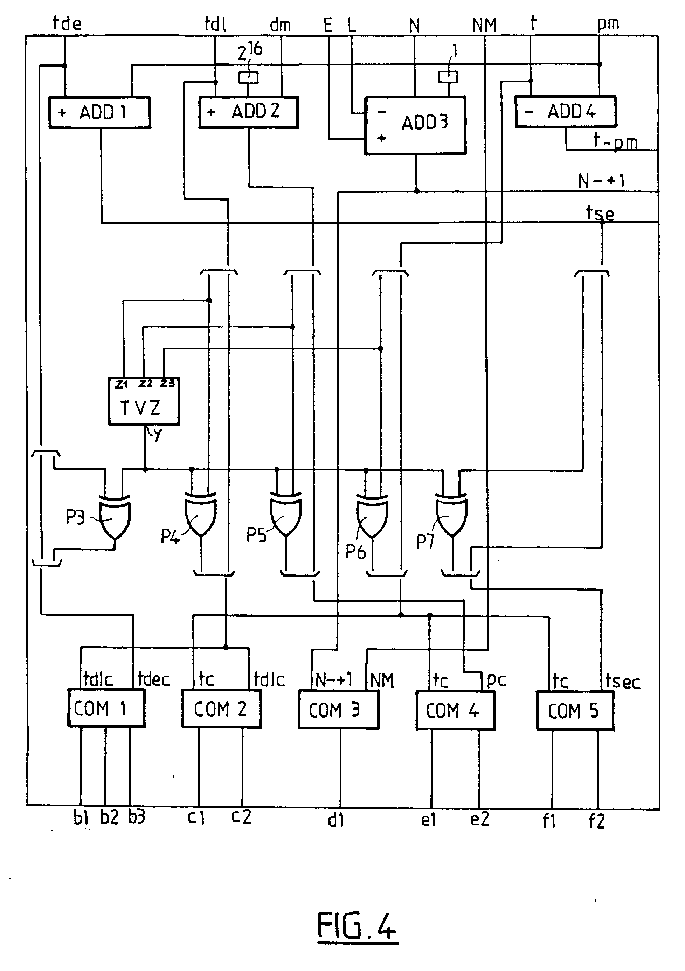

L'unité arithmétique et logique UAL associée à la mémoire MCO est représentée dans le bloc-diagramme de la Fig. 3. Il comprend une partie arithmétique UAR et une partie de décisions logiques UDL. La partie UAR, Fig. 4, comprend quatre additionneurs ADD1 à ADD4, un circuit de test de voisinage à zéro TVZ, cinq portes OU-exclusif P3 à P7 et cinq comparateurs COM1 à COM5.

Le circuit UAR comporte les entrées tde, tdl, dm, E, L, N, NM, t et pm. Il comporte également les sorties t-pm, N-+1, tse, b1, b2, b3, c1, d1, e1, e2, f1 et f2.

Le circuit ADD1 est un additionneur arithmétique qui a ses deux entrées reliées respectivement aux entrées tde et pm, et sa sortie à la sortie tse qui délivre l'heure (tde+pm).

Le circuit ADD2 est un additionneur arthmétique qui a trois entrées dont l'une est reliée à l'entrée tdl, la seconde à l'entrée dm et la troisième reçoit en permanence la valeur CMT qui correspond au nombre de cases dans la mémoire MT. A titre d'exemple, cette valeur peut être de 2¹⁶, soit 65 536. L'exposant 16 correspond aux seize bits de la seconde partie de t, Fig. 2. Les huit bits de poids fort de t permettent de ne pas avoir de valeur zéro à chaque cycle de la mémoire tampon MT, mais un passage par zéro uniquement tous les 2²⁴ temps élémentaires de la base de temps BT, ce qui correspond à une période T de celle-ci.

La sortie P de l'additionneur ADD2, qui délivre la valeur (td1+dm+2¹⁶), est reliée, indirectement par la porte P5 pour son bit de poids fort, à la seconde entrée Pc du comparateur COM4.

Le circuit ADD3 est un additionneur algébrique qui a deux entrées de commande respectivement reliées aux entrées E et L, et deux entrées dont l'une est reliée à l'entrée N et l'autre reçoit en permanence la valeur "1". Ainsi, quand l'entrée E est activée, le circuit ADD3 ajoute "1" à la valeur N tandis que quand l'entrée L est activée, il soustrait "1" de la valeur N. Ainsi, la sortie du circuit ADD3 délivre soit (N+1), soit (N-1), et est reliée à la sortie N-+1 et à la première entrée du comparateur COM3.

Le circuit ADD4 est un soustracteur arithmétique qui a ses deux entrées reliées respectivement aux entrées t et pm. Sa sortie délivre la valeur (t-pm) et est reliée à la sortie t-pm.

Le circuit TVZ a trois entrées z1 à z3 et une sortie Y. Les entrées z1 à z3 sont respectivement reliées aux fils de bit de poids fort de l'entrée tdl, de la sortie P de l'additionneur ADD2 et de l'entrée t, ces fils étant également respectivement reliés aux premières entrées des portes P4 à P6. La sortie Y est à "1" quand, parmi les trois bits de poids forts appliqués à ses entrées, la valeur binaire de l'un d'entre eux diffère de celles des deux autres. La sortie Y est reliée aux secondes entrées des portes P4 à P6. Par ailleurs, le fil de bit de poids fort de l'entrée tde est relié à la première entrée de la porte P3 dont la seconde entrée est reliée à la sortie Y du circuit TVZ. Enfin, le fil de bit de poids fort de la sortie tse est relié à la première entrée de la porte P7 dont la seconde entrée est aussi reliée à la sortie Y.

Dans le cas où Y = 0, le bit de poids fort de chacune des valeurs tde, tse, tdl, P et t n'est pas altéré en passant dans sa porte OU-exclusif associée. Dans le cas où Y = 1, le bit de poids fort change de valeur à la sortie des portes P3 à P7, ce qui conduit, une fois qu'il a été associé au reste des bits de poids faible, à avoir toutes les valeurs dans une zone ne comprenant pas la valeur zéro d'un cycle complet de la base de temps BT et donc de pouvoir les comparer, sans ambiguïté, dans les comparateurs COM1, COM2, COM4 et COM5, autour de la valeur T/2.

Le comparateur COM1 a ses deux entrées tdlc et tdec respectivement reliées aux sorties des portes P4 et P3. Sa sortie b1 est activée quand tdec est supérieur tdlc, la sortie b2 est activée quand tdle est égal à tdlc, et la sortie b3 est activée quand tdec est inférieur à tdlc.

Le comparateur COM2 a une entrée tc reliée à la sortie de la porte P6 et une entrée tdlc reliée à la sortie de la porte P4. Sa sortie c1 est activée quand tc est inférieur à tdlc et sa sortie c2 quand tc est égal ou supérieur à tdlc.

Le comparateur COM3 a sa première entrée qui reçoit N-+1 et sa seconde entrée reliée à l'entrée NM. Sa sortie d1 est activée quand N-+1 est supérieur NM.

Le comparateur COM4 a une entrée tc reliée à la sortie de la porte P6 pour le bit de poids fort et à l'entrée t pour les bits de poids faible et une entrée Pc reliée à la sortie de la porte P5 pour le bit de poids fort et la sortie P pour les reste des bits de poids faible. Sa sortie e1 est activée quand tc est supérieur Pc et sa sortie e2 est activée quand tc est égal ou inférieur à Pc.

Le comparateur COM5 a une entrée tc reliée en parallèle sur l'entrée tc du comparateur COM4 et une entrée tsec reliée à la sortie de la porte P7 pour le fil de poids fort et à la sortie de l'additionneur ADD1 pour le reste des bits de poids faible. Sa sortie f1 est activée quand tc est inférieur à tsec ce qui est un cas normal d'un premier type tandis que sa sortie f2 est activée quand tc est supérieur à tsec ce qui est un cas normal d'un second type.

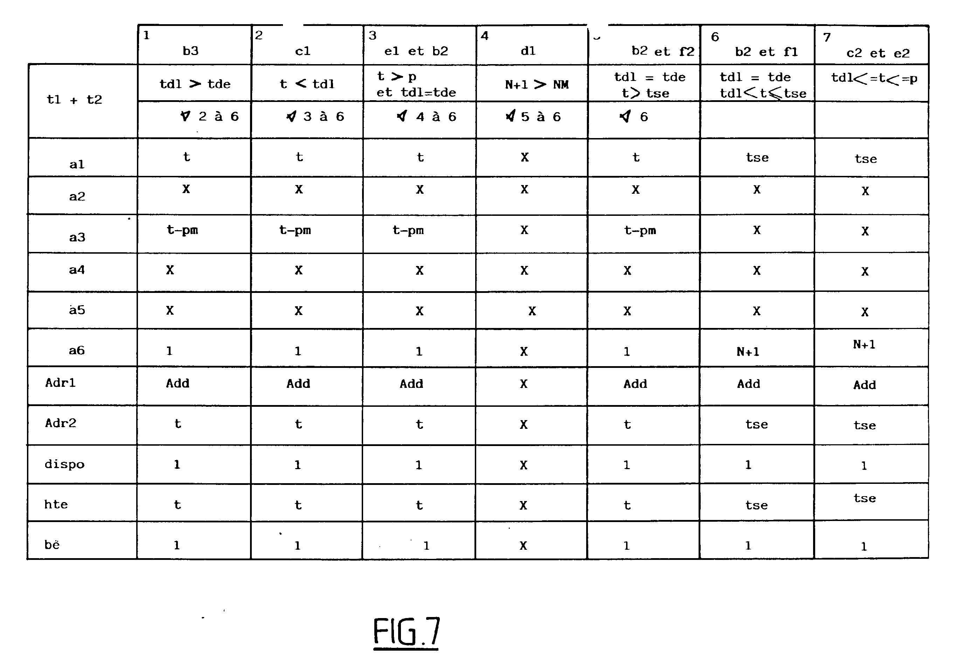

Le signal de sortie tse produit par l'additionneur ADD1 correspond à une heure qui est la somme de l'heure théorique d'émission de la cellule précédente tde et de la période minimum pm. La Fig. 2 montre que l'heure tse (tde+pm) est, comme tde, codée sur trente-deux bits dont une partie décimale. Le signal t-pm produit par le soustracteur ADD4 correspond à une heure qui précède le temps courant t d'une valeur égale à la période minimale pm. L'heure t-pm est aussi codée sur trente-deux bits dont une partie décimale. Elle est utilisée dans le cas de réinitialisation, comme on le verra dans la suite en relation avec la Fig. 7. Les signaux NM et N-+1 sont codés sur vingt-quatre bits, sans partie décimale. Le signal NM correspond à un nombre qui représente, pour une communication, le nombre maximum de cellules en attente dans la mémoire MT. Le signal N-+1 est également un nombre qui est comparé au nombre NM dans le comparateur COM3. Le signal P, produit par l'additionneur ADD2, correspond à une heure qui est la somme de l'heure tdl, c'est-à-dire l'heure d'émission théorique de la dernière cellule émise, plus le délai maximum dm entre deux cellules, plus le nombre de cases de la mémoire MT. Il est donc certain qu'à l'heure P, toutes les cellules en attente dans la mémoire MT ont été émises, d'où l'intérêt de la comparaison du temps courant t avec le temps P, comme on le verra plus loin.

Le signal b1 du comparateur COM1 est à "1" quand tdec est supérieur à tdlc, ce qui exprime que, à l'arrivée de la cellule faisant partie d'une correspondance, l'heure théorique d'émission de la cellule qui est arrivée juste avant est plus tardive que l'heure théorique à laquelle la dernière cellule de la même communication a été émise. Il s'agit d'un cas normal. Le signal b2 à "1" correspond aussi à un cas normal, celui où les deux heures théoriques sont égales. Par contre, le signal b3 à "1" exprime un cas de faute. Il n'est pas possible que l'heure théorique d'émission d'une cellule appartenant à une conversation précède l'heure théorique d'une cellule de la même conversation déjà émise.

Le signal c1 produit par le comparateur COM2 à "1" exprime que tc est inférieur à tdlc. Il s'agit d'un cas de faute, étant donné que tdlc correspond, au temps tc, à une cellule déjà émise. Le signal de sortie c2 à "1" correspond à un cas normal.

Le signal de sortie d1 du comparateur COM3 à "1" correspond au cas où la mémoire accepterait un nombre de cellules d'un conversation supérieure à ce qui a été convenu au début de la conversation, le nombre convenu étant NM. C'est donc aussi un cas de faute.

Le signal de sortie el du comparateur COM4 à "1" exprime que tc est supérieur à Pc. Le signal e2 à "1" correspond à un cas normal.

Le signal de sortie f1 du comparateur COM5 à "1" exprime que tc est inférieur ou égal à tsec ce qui correspond à un cas normal d'un premier type, comme on le verra dans la suite. Le signal de sortie f2 à "1" exprime que tc est supérieur à tsec, ce qui correspond à un cas normal d'un second type.

Les signaux f1 et f2 du comparateur COM5 correspondent à deux types de cas normaux comme on le verra plus tard.

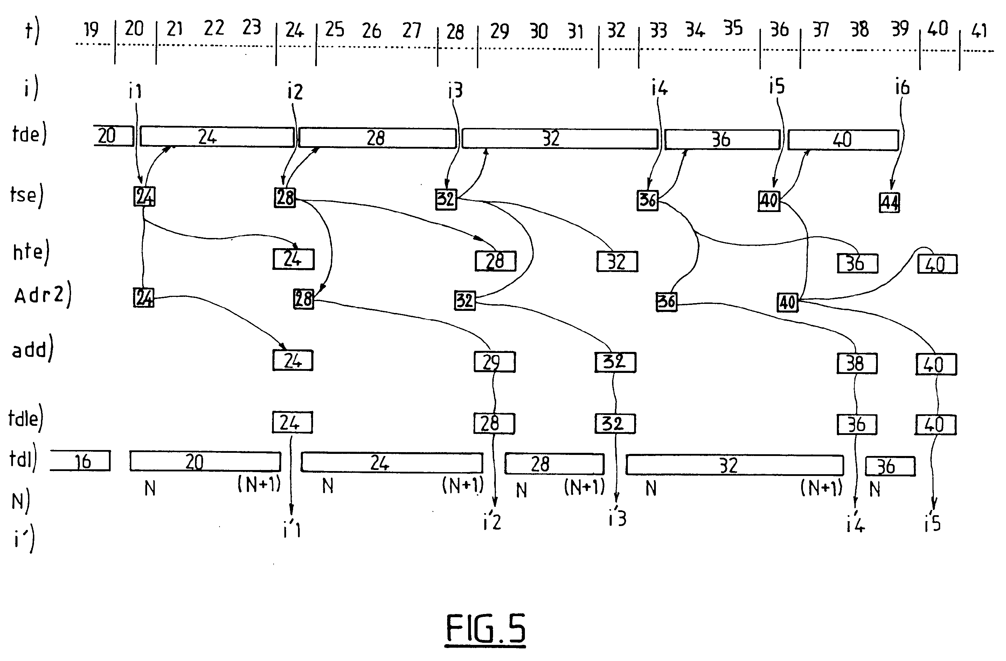

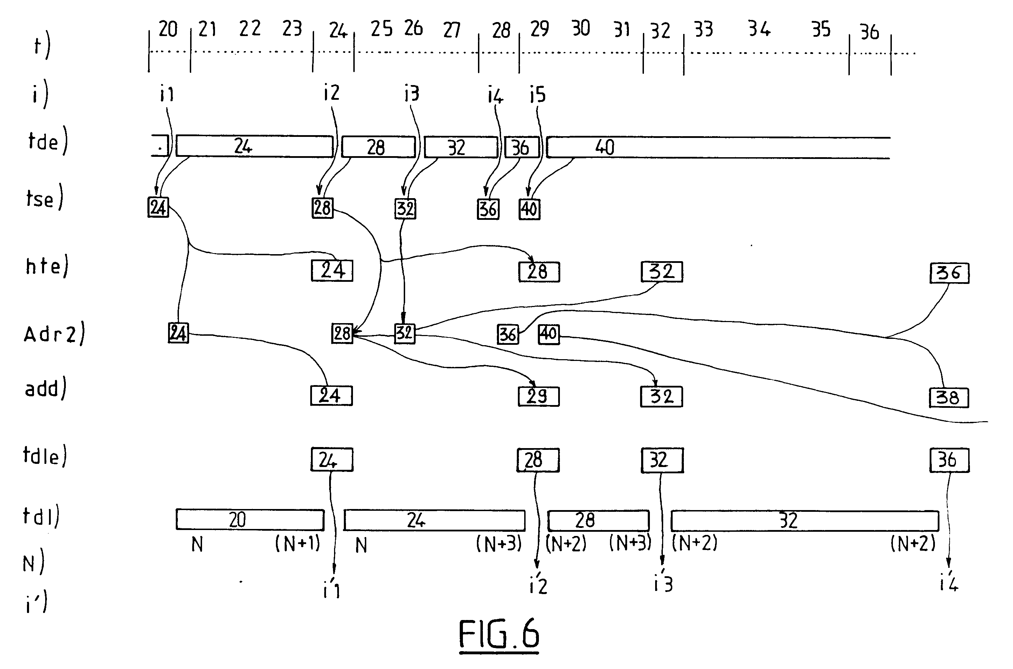

Avant de considérer en détail comment le circuit de décisions logiques UDL traite les différents cas en fonction des signaux b1 à e2 qui lui sont appliqués, on va illustrer en relation avec les Figs. 5 et 6 deux cas de fonctionnements courants et normaux, la valeur de pm étant de quatre temps élémentaires.

Dans les diagrammes temporels de la Fig. 5:
- la ligne t) montre partiellement le déroulement de l'heure locale t, soit ici les temps élémentaires t19 à t41,
- la ligne i) indique les cellules entrantes de la conversation i, soit ici i1 à i6, étant supposé qu'il ne s'agit pas d'un début de conversation,
- la ligne tde) montre les différentes valeurs tde inscrites successivement dans la zone correspondant à la conversation i de la mémoire MCO,
- la ligne tse) indique les différentes valeurs de tse à la sortie correspondante du circuit UAR,
- la ligne hte) indique les valeurs successives de hte,
- la ligne Adr2) indique les différents adresses initiales appliquées à la mémoire MAD pour qu'elle cherche l'adresse d'une case suivante disponible dans la mémoire MT,
- la ligne add) indique les adresses de la mémoire MT successivement déterminées par la mémoire MAD, en notant que chaque valeur hte est aussi enregistrée à la même adresse de MT, bien que cette valeur puisse être différente de cette adresse,
- la ligne tdle) indique les valeurs successives de tdle à chaque lecture de cellule, la valeur de tdle étant appelée à être mémorisée sous forme de tdl dans la zone correspondant à la conversation i dans la mémoire, après traitement dans le circuit de décisions logiques UDL,
- la ligne td1) indique précisément les valeurs successives de tdl,
- la ligne N) indique les nombres successifs de cellules de la conversation i qui sont dans la mémoire MT, et
- la ligne i′) indique les temps de sortie des cellules de la conversation i, soit ici i′1 à i′5, correspondant à i1 à i5.

Dans les diagrammes temporels de la Fig. 6, on a adopté les mêmes conventions.

Dans le cas de la Fig. 5, les cellules il à i5 arrivent à l'entrée du système de l'invention en respectant la période pm de quatre temps élémentaires, sauf pour i4 qui arrive avec un temps de retard. La recherche d'une adresse libre dans la mémoire MAD est immédiate, sauf pour la mémorisation de la cellule i2. Donc, les cellules i'1 à i'5 sortent à peu près espacées comme sont arrivées les cellules i1 à i5. On rappelle que la période pm est la période théorique minimum d'espacement entre deux cellules réémises. Dans le cas de la Fig. 5, on a supposé que les cellules entrantes respectaient pratiquement cette même période pm et on constate que normalement les cellules réémises la respectent aussi.

Dans le cas illustré à la Fig. 6, à partir de la cellule i2, la période minimale pm n'est plus respectée, les cellules entrantes i3 à i5 arrivent très rapprochées, alors que la cellule suivante arrive nettement plus tard. Mais on notera que les cellules sortantes i′1 à i′4 sont bien espacées, ce qui confirme que le système de l'invention effectue un lissage. La Fig. 6 montre également que le nombre N peut augmenter rapidement en cas de rafales. Si la rafale i3 à i5 avait continué, le nombre N aurait pu dépasser un maximum NM, ce qui aurait entraîné l'élimination des dernières cellules de la rafale.

Les deux cas illustrés aux Figs. 5 et 6 ne constituent que des exemples de cas normaux qui permettent d'apprécier le cas de fautes ou d'autres cas normaux qui vont maintenant être décrits en détail en considérant les Figs. 7 à 9.

Comme le montre la Fig. 3, les entrées du circuit de décisions logiques sont: N-+1, t-pm, tse, b1, b2, b3, c1, c2, d1, e1, e2, f1, f2, AM, bs, PP, tdle, t, et t1 à t6. On va maintenant décrire successivement les traitements exécutés à l'arrivée d'une cellule entrante, à l'émission d'une cellule sortante et à l'accès de l'unité centrale.

A l'arrivée d'une cellule entrante, celle-ci est traitée en t1, puis t2, Fig. 7. La zone de la mémoire MCO, qui correspond à la communication i à laquelle appartient la cellule entrante, est adressée, à travers le multiplexeur MX1 commuté par l'entrée E = t1+t2, par l'étiquette Vcie de la cellule. L'état de ladite zone de la mémoire MCO est lu en t1 et ses signaux de sorties appliqués au circuit UAR qui délivre les signaux b1 à f2.

Les différentes cases indiquées dans le tableau de la Fig. 7 représentent les actions à entreprendre en fonction des événements définis par les signaux b1 à f2 (première ligne), associés aux conditions inscrites à la deuxième ligne. On rencontre donc les cas suivants:
1) b3 est à "1", quels que soient les autres signaux b2 à e2. Normalement, l'heure tde est toujours supérieure ou égale à l'heure tdl puisque tdl correspond à une cellule émise et tde à cette même cellule ou à une cellule suivante. C'est donc un cas de faute. Cependant, suivant le système de l'invention, la décision est prise de prendre en compte la cellule entrante. En t2, les signaux a1 à a6 prennent les valeurs suivantes: t, c'est à dire l'heure courante, x, t-pm, x, x, 1, x indiquant que la valeur existant déjà dans la zone correspondante de MCO est inchangée. On voit notamment qu'à l'heure tdl est attribuée la valeur t-pm pour que tdl soit différente de tde, ce qui est utile pour des cas suivants, et que le nombre N prend la valeur 1 pour indiquer qu'il y a une cellule de la communication i qui a été mémorisée.
   De plus, les seize bits du signal a1, correspondant aux seize bits de poids faible de t, sont appliqués, par les portes P2 ouvertes par le signal E, à l'entrée Adr2 de la mémoire MAD qui va chercher l'adresse égale ou supérieure à t d'une case libre dans la mémoire MT. Le faisceau des 32 fils de a1, toujours par les portes P2, est prolongé vers l'entrée hte de la mémoire MT. Le fil be est à "1". La mémoire MT adressée par le multiplexeur MX3 mémorise la cellule entrante, l'heure hte et le bit be dans la case correspondante.
   Enfin, la mémoire MAD inscrit le bit "1" présent à l'entrée dispo reliée au fil be dans la case d'adresse Add, l'adressage d'écriture étant transmis par le multiplexeur MX2 commandé par E.
2) c1 est à "1", quels que soient les signaux e1, b2, d1, c2 et e2.
   Ce cas ne peut normalement se produire et c'est donc un cas de faute. On décide de prendre la cellule entrante en compte et on prend les mêmes actions qu'en 1) ci-dessus.
3) e1 et b2 sont à "1", quels que soient les signaux d1, b2, c2 et e2.
   Ce cas signifie qu'au bout du temps P, qui est la somme de tdl, de dm et d'un cycle de lecture de la mémoire MT, soit 2¹⁶ dans l'exemple décrit, on est certain que toutes les cellules de la communication i en attente dans la mémoire MT ont été lues, si une nouvelle cellule de cette communication ne s'est pas présentée très récemment. On décide de prendre la cellule entrante en compte et les actions sont les mêmes qu'en 1) ci-dessus.
4) d1 est à "1", quels que soient b2, c2 et e2.
   En t1, à la lecture de la zone de la mémoire MCO, il apparaît que le nombre N de cellules de la communication i en attente dans la mémoire MT est supérieur à NM, c'est-à-dire supérieur au nombre convenu lors de l'établissement de la communication i. On prend la décision de ne pas écrire la cellule entrante qui se trouve éliminée, les données déjà existantes dans la zone correspondante de la mémoire MCO étant inchangées.
5) b2 et f2 sont à "1", quels que soient c2 et e2.
   Ce cas correspond à une absence de cellule à émettre pour la communication i. On prend la cellule entrante en compte et les actions sont les mêmes qu'en 1) ci-dessus.
   On notera que ce cas correspond au cas initial après établissement de la communication i.
6) b2 et f1 sont à "1", quels que soient c2 et e2.
   C'est un cas normal de fonctionnement du second type. La cellule entrante va être prise en compte, En t2, la valeur de tse va devenir la nouvelle heure tde et, par a1 et les portes P2, va adresser l'entrée Adr2 de la mémoire MAD et la fin des actions va être la même que celle du cas 7) ci-dessous. De plus, la valeur de N va être incrémentée d'une unité.
7) c2 et e2 sont à "1".
   C'est un cas normal de fonctionnement de premier type. La cellule entrante va être prise en compte. En t2, la valeur de tse va devenir la nouvelle heure tde et, par a1 et les portes P2, va adresser l'entrée Adr2 de la mémoire MAD. Les contenus de a2 à a5 sont inchangés. La valeur de N va être incrémentée d'une unité et rangée en a6.
   Ce septième cas est illustré par les diagrammes des Figs. 5 et 6.

A l'émission d'une cellule sortante, la zone de la mémoire MCO, qui correspond à la communication i à laquelle appartient la cellule sortante, est adressée, à travers le multiplexeur MX1 commuté par l'entrée S = t3+t4, par l'étiquette Vcis de la cellule, qui est délivrée par la mémoire MT. L'état de ladite zone de la mémoire MCO est lu en t3 et ses signaux de sortie appliqués au circuit UAR qui délivre les signaux b1 à f2.

Il est important de noter qu'une case de la mémoire MT, donc une cellule, ne peut être lue que si le bit be qui est associé est à "1".

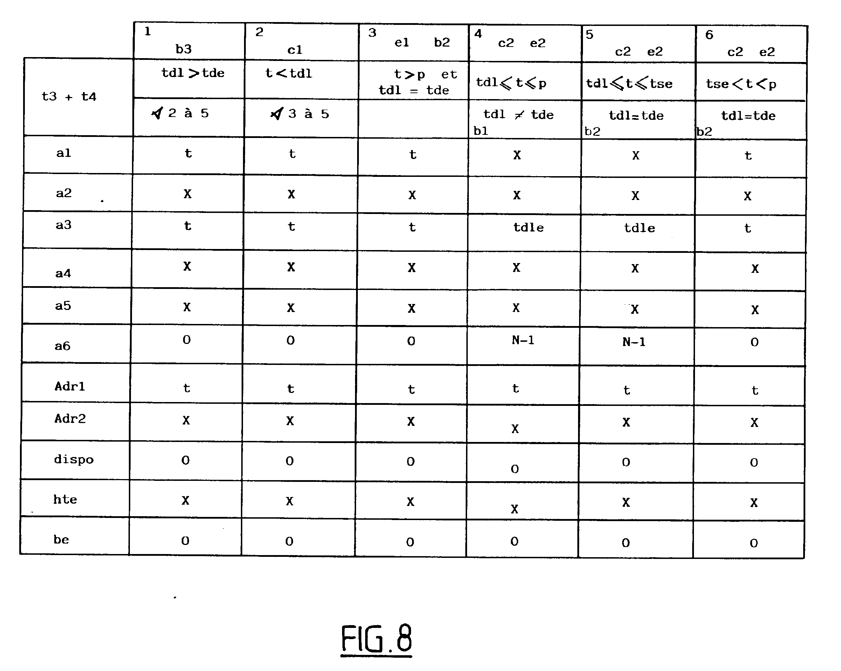

Les différentes cases indiquées dans le tableau de la Fig. 8 représentent les actions à entreprendre en fonction des événements définis par les signaux b1 à f2 (première ligne), associés aux conditions inscrites à la deuxième ligne. On rencontre donc les cas suivants:
1) b3 est à "1", quels que soient c1, e1, b2, c2 et e2.
   Ce cas correspond à un cas de faute, comme à l'arrivée d'une cellule entrante, et pour les mêmes raisons. On attribue aux heures tde et tdl la valeur de l'heure courante t et on met N à "0", be à "0", les autres champs pm, dm et NM de la case étant inchangés.
2) c1 est à "1", quels que soient e1 et b2, c2 et e2.
   Pour les mêmes raisons que lors de l'arrivée d'une cellule entrante, il s'agit d'un cas de faute et les actions prises sont les mêmes qu'en 1) ci-dessus.
3) e1 et b2 sont à "1".
   Il s'agit d'un cas anormal. En effet, puisque l'heure tde est égale à l'heure tdl, il n'y a plus de cellule de la communication en attente à émettre. Or l'adressage de la mémoire MCO est effectué par l'étiquette Vcis de la cellule en cours de lecture dans la mémoire MT. De plus, l'heure t supérieure à P indique que, depuis la dernière cellule émise, il s'est écoulé un peu plus d'un cycle de lecture de la mémoire tampon MT. Cela confirme que toutes les cellules auraient dû être lues. On effectue les mêmes actions qu'en 1) ci-dessus.
   A noter que si e1 est à "1", mais b2 à "0", cela signifie que la dernière cellule entrante est arrivée très récemment. Il faut alors émettre comme ci-dessous en 4).
4) c2 et e2 sont à "1", et b1 à "1".
   Il s'agit d'un cas normal de lecture cellule sortante pour émission. L'heure tdle délivrée par la mémoire MT est utilisée pour remettre à jour, par a3, l'ancienne valeur de l'heure tdl dans la zone correspondante de la mémoire MCO. Par ailleurs, par a6, le nombre N est décrémenté puisque l'additionneur ADD3 du circuit UAR a fonctionné en soustracteur. Par le multiplexeur MX2, commandé par S, la mémoire MAD est adressée par l'heure courante t et le fil be remet la case correspondante de la mémoire MAD à "0", ce qui signifie que cette case redevient libre. Enfin, le fil be remet aussi à "0" le bit correspondant de la mémoire MT. Les autres champs de la zone de la mémoire MCO restent inchangés.
5) c2 et e2 sont à "1" et b2 et f1 à "1".
   Il s'agit d'un cas normal et on prend les mêmes actions qu'en 4) ci-dessus.
6) c2 et e2 sont à "1" et f2 et b2 à "1".
   Il s'agit d'un cas de faute puisqu'on lit une cellule et qu'il n'y en a théoriquement plus. On prend donc les mêmes actions qu'en 1) ci-dessus.

Pour l'accès de l'unité centrale UC à la mémoire MCO, le multiplexeur MX1 est commuté par le signal U = t5+t6 et l'unité centrale UC délivre elle-même l'adresse UCa de la zone qu'elle va analyser. L'état de la zone sélectée est lu en t5 et ses signaux de sortie appliqués à l'unité UAR. En t6, on réécrit dans la zone les données résultant des calculs et des décisions logiques sortant de l'unité UDL. Dans le fonctionnement du système concerné par l'invention, l'unité UC n'intervient pas sur les mémoires MAD et MT.

L'accès de l'unité centrale UC à la mémoire MCO correspond à plusieurs fonctions: la mise à jour horaire et l'initialisation d'une communication.

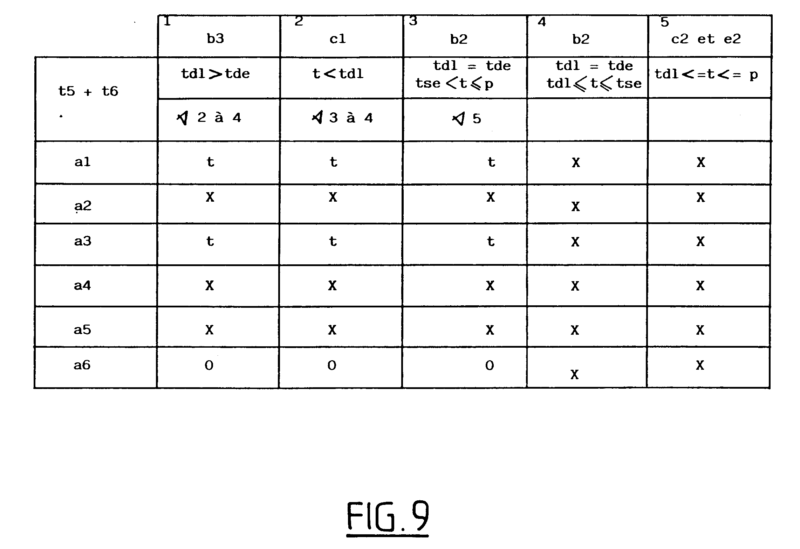

Les différentes cases indiquées dans le tableau de la Fig. 9 représentent les actions à entreprendre pour la mise à jour horaire en fonction des événements définis par les signaux b3, c1, b2 et c2 et e2 (première ligne), associés aux conditions inscrites à la deuxième ligne. On rencontre donc les cas suivants:
1) b3 est à "1", quel que soit l'état de c1, b2, c2 et e2.
   Il s'agit d'un cas de faute car l'heure tdl ne peut dépasser l'heure tde. On écrit dans la zone concernée des valeurs de tde et de tdl égale à l'heure courante t, et on donne au nombre N la valeur "0", les autres champs pm, dm et NM étant inchangés.
2) c1 est à "1", quel que soit l'état de b2 et c2 et e2.
   Il s'agit aussi d'un cas de faute et on prend les mêmes actions qu'en 1) ci-dessus.
3) b2 est à "1", quel que soit c2 et e2.
   Il s'agit du cas normal de remise à l'heure avec aucune cellule en attente d'émission pour la communication considérée. En effet, la communication n'a pas été active pendant un certain temps et les valeurs horaires de tde et de tdl présentes dans la zone de la communication considérée sont dues soit à une activité précédente, soit à une précédente remise à l'heure par l'unité centrale UC. Les actions prises sont les mêmes qu'en 1) ci-dessus.
4) b2 et f2 sont à "1".
   C'est un cas normal et aucun changement dans les champs de zone n'est entrepris.
5) c2 et e2 sont à "1".
   C'est un cas normal et aucun changement dans les champs de la zone n'est entrepris.

Dans la seconde fonction, l'unité centrale UC intervient aussi dans la mémoire MCO, soit pour initialiser celle-ci, soit pour établir une nouvelle communication, soit pour une mise à jour. Dans ce cas l'adresse UCa comporte un bit d'adresse supplémentaire de poids plus fort mis à "1" pour différencier cette fonction de celle d'une simple mise à jour horaire. Il en résulte qu'indépendamment des calculs et des décisions dans l'unité UAL, l'unité centrale UC accède aux fils de sortie a1 à a6 par l'intermédiaire de la liaison AM. Les six sections de la zone considérée sont ainsi positionnées directement. A noter que dans ce cas les heures tde et tdl prennent la valeur de l'heure courante t.

La mise à jour de la mémoire MCO par l'unité centrale UC a lieu cycliquement. L'unité centrale explore toute la mémoire MCO au moins en un temps inférieur à T/2, où T correspond, comme on l'a déjà mentionné, à un cycle de la base de temps BT. Ansi, l'unité centrale UC maintient toutes les valeurs affectées à une communication à proximité de l'heure exacte t délivrée par la base de temps BT, de façon que toutes ces heures soient toujours distantes les unes des autres d'un valeur inférieure à T/2.

De cette façon, si le poids fort d'une quelconque des heures diffère, pour une communication, du poids fort d'une autre heure, c'est que l'ensemble de ces heures se trouvent au voisinage du passage de la base de temps BT à zéro. Il convient, dans ce cas, d'effectuer la comparaison des heures en rajoutant la valeur T/2 à toutes heures avant comparaison; elles se retrouveront au voisinage de T/2 et l'ordre chronologique sera respecté dans les comparaisons. C'est cette addition qui est effectuée ou non, par le circuit TVZ et les portes P3 à P7, Fig. 3.

Le système peut être simplifié en prenant une marge supérieure pour le calcul de la valeur. P. On peut n'effectuer des remises à jour que si N=0, lorsque t est supérieur à tde. En effet, si N est différent de zéro, les remises à jour ont lieu en permanence puisque la communication est active.

Si t est inférieur à tde, on tombe dans le cas de faute de non remise à 0 par l'unité centrale ou autres et les remises à jour s'imposent.

Cette simplification conduit à supprimer les champs tdl et dm dans la mémoire MCO et le champ tdle dans la mémoire MT. De plus la condition tde = tdl est remplacée par la condition N = 0.

Si N =0, les pointeurs sont remis à jour dans tous les cas. De plus, en réception de cellule entrante, celle-ci est prise en compte et N prend la valeur N = 1. En réémission de cellule sortante ou mise à jour par l'unité centrale UC, N prend la valeur 0. Toutes les valeurs sont positionnées comme dans la colonne 1 des Figs. 7 à 9, sauf que le champ a3 n'existe pas.

Si N est différent de 0 et que t est supérieur à tde, une cellule entrante est prise en compte avec la valeur (N+1) dans le champ a6. Une cellule sortante est prise en compte avec la valeur (N-1) dans le champ a6. La mise à jour par l'unité centrale ne modifie rien.

Si t est inférieur à tde, il y a remise à l'heure.

A l'initialisation par l'unité centrale UC, les champs tde, pm, tdl et dm sont positionnés à 0, puis les zones correspondant aux circuits virtuels choisis pour véhiculer des communications sont progressivement initialisées, d'abord les chmaps pm et dm, puis les champs tde et tdl par remise à l'heure.

A noter encore que si la mémoire tampon MT déborde, on aura une absence d'adresse libre dans la mémoire MAD et la cellule entrante sera rejetée.

## Revendications

1. Méthode de lissage de débits de communications temporelles asynchrones formées de cellules portées par un multiplex temporel asynchrone entrant (XE) pour délivrer un multiplex temporel asynchrone sortant (XS), caractérisée en ce que chaque cellule entrante est rangée dans une mémoire tampon (MT) à une adresse (Add) correspondant à son heure réelle de réémission (t) sur le multiplex temporel sortant (XS), ladite heure réelle de réémision étant déterminée en fonction d'une période (pm) attribuée à la communication à laquelle appartient ladite cellule entrante, ladite période (pm) correspondant à la période minimale théorique entre cellules réémises dans le multiplex temporel asynchrone sortant (XS).

2. Méthode suivant la revendication 1, caractérisée en ce que ladite période (pm) est attribuée à la communication selon le débit de la source émettant les cellules de la communication et peut être choisie entre zéro et la valeur du débit du multiplex entrant (XE).

3. Méthode suivant la revendication 1 ou 2, caractérisée en ce que ladite adresse de rangement (Add) de la cellule entrant dans ladite mémoire tampon (MT) est déterminée en calculant en fonction de ladite période (pm) une heure théorique d'émission (tse), puis en cherchant dans la mémoire tampon (MT) la première adresse libre (Add) correspondant à une heure réelle d'émission (t) qui soit chronologiquement au-delà de ladite heure théorique d'émission (tse).

4. Méthode suivant la revendication 3, caractérisée en ce que ladite heure théorique d'émission (tse) d'une cellule entrante est:
- soit l'heure calculée en ajoutant ladite période (pm) attribuée à ladite communication à laquelle appartient la cellule entrante à l'heure théorique d'émission (tde) déterminée pour la cellule précédente de la même communication, si l'heure d'arrivée (t) de ladite cellule entrante n'est pas au-delà de l'heure théorique d'émission (tse) ainsi calculée,
- soit, dans le cas contraire, l'heure d'arrivée (t) de ladite cellule entrante.

5. Méthode suivant l'une des revendications 1 à 4, caractérisée en ce que la méthode de lissage mentionnée ci-dessus est complétée par un traitement de contrôle de flux consistant à comparer le nombre de cellules (N) d'une même communication qui sont mémorisées dans la mémoire tampon et qui n'ont pas été encore émises à l'heure d'arrivée d'une cellule entrante appartenant à ladite communication à un nombre maximal (NM) attribué à la communication et, dans le cas où le premier nombre dépasse le second, à ne pas réémettre ladite cellule entrante.

6. Méthode suivant l'une des revendications 1 à 4 et 5, caractérisée en ce que, quand les valeurs binaires à comparer sont situées de part et d'autre de la valeur zéro du cycle de la base de temps, un "1" est ajouté à leur bit de poids fort de manière à réaliser les comparaisons sur des valeurs translatées à l'intérieur d'une zone temporelle ne comportant pas de valeur nulle.

7. Moyens de mise en oeuvre d'une méthode suivant l'une des revendications 1 à 4, comprenant une mémoire tampon (MT), une mémoire d'état (MCO), une base de temps (BT) et une unité arithmétique et logique (UAL), la mémoire tampon (MT) étant divisée en case de mémoire, chaque case de la mémoire tampon comprenant trois sections:
- une première section (DON) dans laquelle est mémorisé le champ des données utiles d'une cellule,
- une seconde section (Vcie) dans laquelle est mémorisée l'étiquette de ladite cellule,
- une troisième section (be) dans laquelle est mémorisé un bit indiquant l'occupation ou la disponibilité de la case,
la mémoire d'état (MCO) étant divisée en zones, chaque zone correspondant biunivoquement à une communication transmise par le multiplex teniporel asynchrone entrant (XE) et comprenant trois sections:
- une première section (tde) dans laquelle est mémorisée l'heure théorique d'émission de la cellule précédente appartenant à la même communication que la cellule entrante,
- une seconde section (pm) dans laquelle est mémorisée la période (pm) attribuée à la communication,
- une troisième section (N) dans laquelle est mémorisée le nombre de cellules de la communication qui sont mémorisées dans la mémoire tampon et qui n'ont pas été encore émises à l'heure d'arrivée de la cellule entrante de la même communication,
la base de temps (BT) délivrant l'heure réelle (t) dont chaque temps élémentaire correspond à une adresse de case de la mémoire tampon (MT), et
l'unité arithmétique et logique (UAL) effectuant le calcul conduisant à l'heure théorique d'émission (tse), la comparaison de celle-ci avec l'heure d'arrivée (t) et déterminant l'adresse (Add) de la cellule entrante courante en fonction du résultat de la comparaison.

8. Moyens suivant la revendication 7, caractérisés en ce que chaque zone de la mémoire d'état (MCO) comprend une quatrième section (NM) dans laquelle est mémorisé le nombre maximal ci-dessus et l'unité arithmétique et logique (UAL) effectue la comparaison entre ledit premier nombre et le second ou nombre maximal, et inhibe le traitement de la cellule entrante.

9. Moyens suivant la revendication 7 ou 8, caractérisés en ce qu'ils comprennent encore une mémoire d'adresses disponibles (MAD) comportant autant de cases à un bit que la mémoire tampon (MT) comporte de cases, chaque case à un bit recopiant le contenu de la troisième section de la case associée de la mémoire tampon, ladite mémoire d'adresses disponibles comportant des moyens pour explorer ses cases à un bit dans l'ordre d'adressage croissant à partir d'une adresse déterminée et pour arrêter l'exploration quand ils trouvent la première case à un bit indiquant la disponibilité, l'adresse déterminée correspondant à l'heure théorique d'émission de la cellule entrante traitée et la fin de l'exploration déterminant l'heure réelle de sa ré-émission et l'occupation de la case associée de la mémoire tampon (MT).

10. Moyens de mise en oeuvre de la méthode de la revendication 6, caractérisés en ce qu'ils comprennent un circuit de détection de voisinage de zéro dont la sortie est activée quand les valeurs à comparer sont voisines de zéro, les bits de poids fort des valeurs à comparer étant respectivement appliqués aux premières entrées de portes OU-exclusif correspondantes dont les secondes entrées sont reliées à la sortie du circuit de détection de voisinage de zéro, les sorties desdites portes étant reliées aux entrées correspondantes des comparateurs correspondants.

## Patentansprüche

1. Verfahren für die Glättung der Datenraten von asynchronen Zeitmultiplexübertragungen, welche durch Zellen gebildet werden, die von einem asynchronen Zeiteingangsmultiplex (XE) getragen werden, um einen asynchronen Zeitausgangsmultiplex (XS) zu liefern
**dadurch gekennzeichnet**, **daß**
jede eingegebene Zelle in einem Pufferspeicher (MT) an einer Adresse eingespeichert wird, welche ihrer tatsächlichen Wiederaussendezeit (t) auf dem Zeitausgangsmultiplex (XS) entspricht, wobei diese tatsächliche Zeit der Wiederaussendung entsprechend einem Zeitraum (pm) bestimmt wird, welcher der Datenrate zugeordnet wird, zu der die eingegebene Zelle gehört, wobei dieser Zeitraum (pm) dem theoretischen minimalen Zeitraum zwischen Zellen entspricht, die in dem asynchronen Zeitausgangsmultiplex (XS) wieder ausgestrahlt werden.

2. Verfahren nach Anspruch 1,
**dadurch gekennzeichnet, daß**
dieser Zeitraum (pm) der Datenrate je nach durchsatz der die Zellen der Datenrate ausstrahlenden Quelle zugeordnet wird und zwischen Null und dem Wert des Durchsatzes des Eingangsmultiplex (XE) gewählt werden kann.

3. Verfahren nach einem der Ansprüche 1 oder 2,
**dadurch gekennzeichnet, daß**
die Speicheradresse (Add) der in den Speicherpuffer (MT) eingegebenen Zelle dadurch bestimmt wird, daß entsprechend dem Zeitraum (pm) eine theoretische Aussendezeit (tse) berechnet wird und daß dann in dem Speicherpuffer (MT) die erste freie Adresse (Add) gesucht wird, die einer tatsächlichen Aussendezeit (t) entspricht, welche chronologisch über dieser theoretischen Aussendezeit (tse) liegt.

4. Verfahren nach Anspruch 3,
**dadurch gekennzeichnet, daß**
diese theoretische Aussendezeit (tse) einer eingegebenen Zelle folgende ist:
- entweder die berechnete Zeit, der der Zeitraum (pm) zugerechnet wird, der der Datenrate zugeordnet wird, zu der die eingegebene Zelle zu der theoretischen Aussendezeit (tde) gehört, welche für die vorausgehende Zelle der gleichen Datenrate bestimmt wurde, wenn die Ankunftszeit (t) dieser eingegebenen Zelle nicht über der so berechneten theoretischen Aussendezeit (tse) liegt,
- oder aber, im gegenteiligen Falle, die Ankunftszeit (t) dieser eingegebenen Zelle.

5. Verfahren nach einem der Ansprüche 1 bis 4,
**dadurch gekennzeichnet, daß**
das oben erwähnte Glättungsverfahren durch eine Kontrolle des Flusses ergänzt wird, das darin besteht, daß die Anzahl (N) der Zellen einer gleichen Datenrate, die in dem Pufferspeicher gespeichert sind und die bei der Ankunftszeit einer eingegebenen Zelle, die zu dieser Datenrate gehört, noch nicht ausgesendet wurden, mit einer maximalen dieser Datenrate zugeordneten Anzahl (MM) verglichen wird und, falls die erste Anzahl die zweite Anzahl übersteigt, diese eingegebene Zelle nicht wieder ausgesendet wird.

6. Verfahren nach einem der Ansprüche 1 bis 4 und 5,
**dadurch gekennzeichnet, daß**
wenn die zu vergleichenden binären Werte beidseitig von dem Wert Null des Zyklus der Zeitbasis liegen, ihrem hochwertigen Bit eine "1" zugefügt wird, um die Vergleiche mit Werten durchzuführen, die innerhalb einer Zeitzone verschoben wurden, die keinen Nullwert umfaßt.

7. Vorrichtung für die Durchführung eines Verfahrens nach einem der Ansprüche 1 bis 4, welche einen Pufferspeicher (MT), einen Zustandsspeicher (MCO), eine Zeitbasis (BT) und eine arithmetische und logische Einheit (UAL) enthält, wobei der Pufferspeicher (MT) in Speicherfächer unterteilt ist und jedes dieser Fächer des Pufferspeichers drei Abschnitte enthält:
- einen ersten Abschnitt (DON), in dem der Bereich der Nutzdaten einer Zelle gespeichert wird,
- einen zweiten Abschnitt (Vcie), in dem der Titel der Zelle gespeichert wird,
- einen dritten Abschnitt (be), in dem ein Bit gespeichert wird, welches die Besetzung oder die Verfügbarkeit des Faches anzeigt,
wobei der Zustandsspeicher (MCO) in Zonen unterteilt ist, von denen jede Zone eineindeutig einer Datenrate entspricht, welche von dem eingegebenen asynchronen Zeitmultiplex (XE) übertragen wird, und drei Abschnitte aufweist:
- einen ersten Abschnitt (tde), in dem die theoretische Sendezeit der vorausgegangenen Zelle gespeichert wird, welche zu der gleichen Datenrate gehört, wie die eingegebene Zelle,
- einen zweiten Abschnitt (pm), in dem der der Datenrate zugeteilte Zeitraum (pm) gespeichert wird,
- einen dritten Abschnitt (N), in dem die Anzahl der Zellen der Datenrate gespeichert wird, die in dem Pufferspeicher gespeichert sind und die bei der Ankunftszeit der eingegebenen Zelle der gleichen Datenrate noch nicht ausgesendet wurden,
wobei die Zeitbasis (BT) die wirkliche Zeit (t) liefert, von der jede Elementarzeit einer Fachadresse in dem Pufferspeicher (MT) entspricht, und
die artihmetische und logische Einheit (UAL) die Berechnung, welche zu der theoretischen Aussendezeit (tse) führt und den Vergleich der letzteren mit der Ankunftszeit (t) durchführt, und die Adresse (Add) der laufenden eingegebenen Zelle je nach dem Ergebnis des Vergleiches bestimmt.

8. Vorrichtung nach Anspruch 7,
**dadurch gekennzeichnet, daß**
jede Zone des Zustandsspeichers (MCO) einen vierten Abschnitt (NM) aufweist, in dem die oben genannte maximale Anzahl gespeichert wird und die arithmetische und logische Einheit (UAL) den Vergleich zwischen der ersten Anzahl und der zweiten oder maximalen Anzahl durchführt und die Verarbeitung der eingegebenen Zelle einleitet.

9. Vorrichtung nach einem der Ansprüche 7 oder 8,
**dadurch gekennzeichnet, daß**
sie weiterhin einen Speicher für verfügbare Adressen (MAD) aufweist, welcher die gleiche Anzahl von Fächern mit einem Bit aufweist, wie der Pufferspeicher (MT), wobei jedes Fach mit einem Bit den Inhalt des dritten Abschnittes des zugeordneten Faches des Pufferspeichers kopiert, und dieser Speicher für verfügbare Adressen Mittel enthält, um seine Fächer mit einem Bit in der aufsteigenden Reihefolge der Adressierung ab einer festgesetzten Adresse abzufragen und die Abfrage zu beenden, wenn sie das erste Fach mit einem Bit finden, welches die Verfügbarkeit anzeigt, wobei die festgesetzte Adresse der theoretischen Aussendezeit der behandelten eingegebenen Zelle entspricht und die Beendigung der Abfrage die tatsächliche Zeit ihrer Wiederaussendung und die Besetzung des zugeordneten Faches des Pufferspeichers (MT) bestimmt.

10. Vorrichtung für die Durchführung des Verfahrens nach Anspruch 6,
**dadurch gekennzeichnet, daß**
sie eine Prüfleitung für die Feststellung der Annäherung an Null aufweist, deren Ausgang aktiviert wird, wenn die zu vergleichenden Werte in der Nähe von Null liegen, wobei die hochwertigen Bits der zu vergleichenden Werte jeweils auf die ersten Eingänge entsprechender exklusiver NOR-Glieder beaufschlagt werden, deren zweite Eingänge mit dem Ausgang der Prüfleitung für die Feststellung der Annäherung an Null verbunden sind, und die Ausgänge dieser Glieder an die entsprechenden Eingänge der entsprechenden Komparatoren angeschlossen sind.

## Claims

1. A method of smoothing asynchronous time-divided communication flows consisting of cells carried by an incoming asynchronous time-division multiplex (XE) for feeding to an outgoing asynchronous time-division multiplex (XS), characterised in that each incoming cell is stored in a buffer (MT) at an address (Add) corresponding to its actual time of forwarding (t) to the outgoing time-division multiplex (XS), the said actual time of forwarding being determined as a function of a period (pm) assigned to the communication to which the said incoming cell belongs, and the said period (pm) corresponding to the theoretical minimum period between forwarded cells in the outgoing asynchronous time-division multiplex (XS).

2. A method as claimed in claim 1, characterised in that the said period (pm) is assigned to the communication according to the flow rate of the source transmitting the cells of the communication, and can be selected between zero and the flow-rate value of the incoming multiplex (XE).

3. A method as claimed in claim 1 or 2, characterised in that the said storage address (Add) of the incoming cell in the said buffer (MT) is determined by calculating a theoretical time of transmission (tse), as a function of the said period (pm), and then searching in the buffer (MT) for the first free address (Add) corresponding to an actual time of transmission (t) that is chronologically later than the said theoretical time of transmission (tse).

4. A method as claimed in claim 3, characterised in that the said theoretical time of transmission (tse) of an incoming cell is:
- either the time calculated by adding the said period (pm) - assigned to the said communication to which the incoming cell belongs - to the theoretical time of transmission (tde) determined for the preceding cell of the same communication, if the time of arrival (t) of the said incoming cell is not later than the theoretical time of transmission (tse) thus calculated,
- or the time of arrival (t) of the said incoming cell.

5. A method as claimed in any one of claims 1 to 4, characterised in that said method of smoothing is complemented by flow control processing comprising the step of taking the number of cells (N) of one and the same communication which are stored in the buffer and which have not yet been transmitted at the time of arrival of an incoming cell belonging to the same communication and comparing said number to a maximum number (NM) assigned to the communication, and not forwarding the said incoming cell if the first number exceeds the second.

6. A method according to any one of claims 1 to 4 and 5, characterised in that when binary values to be compared are situated on both sides of the zero value of the time base, a "1" is added to their high-order bit to enable the comparisons to be made on values translated to within a time zone not comprising the value zero.

7. Means for implementing a method according to any one of claims 1 to 4, comprising a buffer (MT), a status memory (MCO), a time base (BT), and an arithmetic and logical unit (ALU), wherein the buffer (MT) is divided into memory locations, each such location comprising three sections:
- a first section (DON), in which the user-data field of a cell is stored,
- a second section (Vcie), in which the header of the said cell is stored, and
- a third section (be), which stores a bit that indicates whether the location is occupied or available;
the status memory (MCO) being divided into areas, each area corresponding one-to-one to a communication transmitted by the incoming asynchronous time-division multiplex (XE) and comprising three sections:
- a first section (tde), which stores the theoretical time of transmission of the preceding cell of the same communication as the incoming cell,
- a second section (pm), which stores the period (pm) assigned to the communication, and
- a third section (N), which stores the number of cells of the communication which are stored in the buffer and which have not yet been transmitted at the time of arrival of the incoming cell of the same communication;
the time base (BT) supplying the real time (t) and each elementary time thereof corresponding to a location address in the buffer (MT); and
the arithmetic and logical unit (ALU) performing the calculation leading to the theoretical time of transmission (tse), comparing the latter with the time of arrival (t), and determining the address (Add) of the current incoming cell as a function of the result of the comparison.

8. Means as claimed in claim 7, characterised in that each area of the status memory (MCO) comprises a fourth section (NM) which stores the above maximum number, and the arithmetic and logical unit (ALU) performs the comparison between the said first number and the second or maximum number and inhibits the processing of the incoming cell.

9. Means as claimed in claim 7 or 8, characterised in that:
such means also comprise a memory of available-addresses (MAD) comprising as many one-bit locations as the number of locations in the buffer (MT), with each one-bit location copying the contents of the third section of the associated location in the buffer;
said memory of available-addresses comprises means for scanning said one-bit locations in ascending address order beginning with a given address and for stopping the scanning when the first one-bit location is found indicating availability;
said given address corresponds to the theoretical time of transmission of the incoming cell processed; and
the end of scanning determines the actual time of forwarding of said cell, and the occupancy status of the associated location of the buffer (MT).

10. Means according to claims 7 and 8 for implementing the method of claim 6, characterised in that such means comprise a proximity-to-zero detection circuit whose output is activated when the values to be compared are close to zero, the high-order bits of the values to be compared being applied respectively to the first corresponding inputs of exclusive-OR gates, whose second inputs are connected to the output of the proximity-to-zero detection circuit, the outputs of the said gates being connected to the corresponding inputs of the corresponding comparators.
